Europäisches Patentamt

European Patent Office

Office européen des brevets

(19)

(11) Veröffentlichungsnummer : **0 132 600**
**B1**

(12) **EUROPÄISCHE PATENTSCHRIFT**

(45) Veröffentlichungstag der Patentschrift :
12.11.86

(21) Anmeldenummer : 84107269.7

(22) Anmeldetag : 25.06.84

(51) Int. Cl.⁴ : **F 16 D 55/22**, F 16 D 65/18

(54) **Scheibenbremse für Schienenfahrzeuge.**

(30) Priorität : 21.07.83 DE 3326372

(43) Veröffentlichungstag der Anmeldung :
13.02.85 Patentblatt 85/07

(45) Bekanntmachung des Hinweises auf die Patenterteilung : 12.11.86 Patentblatt 86/46

(84) Benannte Vertragsstaaten :
AT BE CH DE FR GB IT LI NL SE

(56) Entgegenhaltungen :
DE-A- 2 346 828
DE-B- 2 407 259

(73) Patentinhaber : KNORR-BREMSE AG
Moosacher Strasse 80 Postfach 401060
D-8000 München 40 (DE)

(72) Erfinder : Nadas, Julius
Trezzanostrasse 13
D-8057 Eching (DE)

EP 0 132 600 B1

Jouve, 18, rue St-Denis, 75001 Paris, France

## Beschreibung

Die Erfindung bezieht sich auf eine Scheibenbremse für Schienenfahrzeuge, mit einer durch einen Bremszylinder zuspannbaren, in einer Ebene angeordneten Bremszange, die zwei an ihren bremsscheibenseitigen Enden Bremsbacken tragende Bremshebel umfaßt, welche in ihrem mittleren Bereich durch eine mittels des Bremszylinders längenveränderliche, gegebenenfalls eine automatische Spielnachstellvorrichtung aufweisende Zugstange gelenkig miteinander verbunden sind.

Eine derartige Scheibenbremse ist beispielsweise aus der DE-A-23 46 828 bekannt. Der in der Ebene der Bremszange angeordnete Bremszylinder greift hierbei an den bremsscheibenfernen Enden der Bremshebel derart an, daß er bei Betätigung diese Bremshebelenden auseinanderzuspreizen sucht. Die Zugstange der Bremszange ist spannschloßartig mit einer Gewindespindel mit zwei gegenläufigen Gewindeabschnitten und mit diesen Gewindeabschnitten verschraubten Muttern ausgebildet, wobei die Bremshebel an den Muttern schwenkbar angelenkt sind. Der Bremszylinder ist über ein relativ schwaches, bowdenzugartiges Gestänge und eine Anschlagkupplung mit einer Drehvorrichtung für die Gewindespindel gekoppelt, derart, daß bei Überschreiten bestimmter Hubstrecken des Bremszylinderkolbens die Gewindespindel zum Verkürzen des Abstandes zwischen den beiden Muttern gedreht wird. Der Bremszylinder beansprucht bei dieser Scheibenbremse ebenso wie bei andersartigen, im Prinzip jedoch ähnlich aufgebauten Bremszangen ein beachtliches Bauvolumen und muß gegebenenfalls schwimmend am Schienenfahrzeug gehalten werden, wodurch besondere Halte- und Führungsmittel für die Bremszange bzw. den Bremszylinder erforderlich sind.

Für andersartige Scheibenbremsen, beispielsweise gemäß der GB-A 957 598, ist es bereits bekannt, den Hub des gegebenenfalls als Federspeicherbremszylinder ausgebildeten Bremszylinders in die Drehung einer das Zuspannen der Scheibenbremse bewirkenden, mit einer Spielnachstellvorrichtung versehenen Gewindespindel umzusetzen. Auch hierbei benötigt jedoch der Bremszylinder ein beachtliches Bauvolumen, wodurch der für die Scheibenbremse benötigte Einbauraum relativ groß ist.

Für Fahrzeugbremsen sind viele Bauarten von Drehhebeln bekannt, welche auf bei ihrer Drehung ein Bremsenzuspannen bewirkenden Wellen gelagert und deren Enden an den Kolbenstangen von Bremszylindern anzulenken sind; diese Drehhebel sind zumeist mit manuell oder automatisch betätigbaren Spielnachstellvorrichtungen ausgestattet. Beispiele für derartige Drehhebel zeigen die EP-A 30 766 und die DE-C 25 06 428.

Das Aufhängen der Bremsbacken mittels an diesem und am Schienenfahrzeug mittel- oder unmittelbar angelenkten Aufhängependeln ist bei Scheibenbremsen allgemein bekannt.

Es ist Aufgabe der Erfindung, eine Scheibenbremse der eingangs angegebenen Art derart auszugestalten, daß sie bei einfachem Aufbau nur einen geringen Einbauraum benötigt, dabei die Möglichkeiten zu einer ebenfalls einfachen und raumsparenden Halterung am Schienenfahrzeug und zur Ausstattung mit einer Spielnachstellvorrichtung bietet.

Diese Aufgabe wird nach der Erfindung dadurch gelöst, daß der Bremszylinder mit zur Ebene der Bremszange zumindest annähernd senkrechter Achsrichtung über- oder unterhalb des mittleren Bremszangenbereiches angeordnet ist, daß die Kolbenstange des Bremszylinders über ein Kraftübersetzungsgetriebe mit einem Längenverstellglied der Zugstange gekoppelt ist, derart, daß eine Betätigung des Bremszylinders eine Verkürzung der Zugstange bewirkt, und daß die beiden bremsscheibenfernen Enden der Bremshebel unmittelbar oder mittelbar, gegebenenfalls gegeneinander gelenkig abgestützt sind, und daß der am Schienenfahrzeug festgehaltene Bremszylinder Tragvorrichtungen für eine pendelnde Aufhängung der Bremsbacken und eine drehbare Halterung der bremsscheibenfernen Bremshebelenden aufweist.

Weitere, vorteilhafte Ausgestaltungen der Scheibenbremse sind nach den Merkmalen der Unteransprüche möglich.

In der Zeichnung sind unterschiedliche Ausführungsbeispiele für nach der Erfindung ausgebildete Scheibenbremsen dargestellt, und zwar zeigt

Figur 1 eine Seitenansicht einer Ausführungsform in vergrößertem Maßstab,

Figur 2 eine Ansicht der Scheibenbremse nach Fig. 1 von unten in schematischer Darstellung und in verkleinertem Maßstab, und

Figuren 3 bis 6 schematisierte Seitenansichten von weiteren Ausführungsvarianten der Scheibenbremse in verkleinertem Maßstab.

Gleiche oder einander entsprechende Teile sind in den Figuren mit gleichen Bezugszahlen bezeichnet.

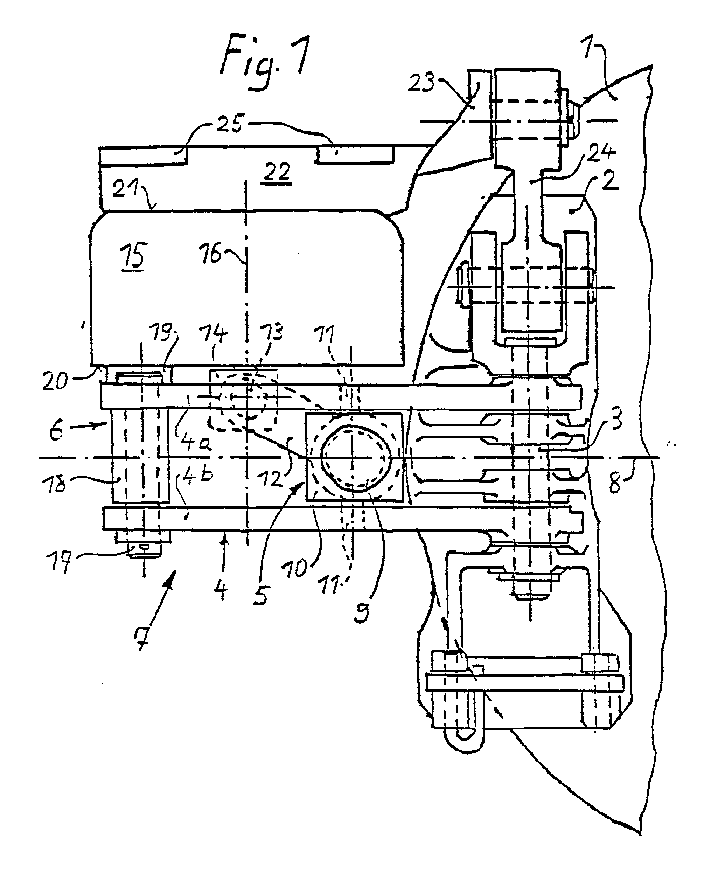

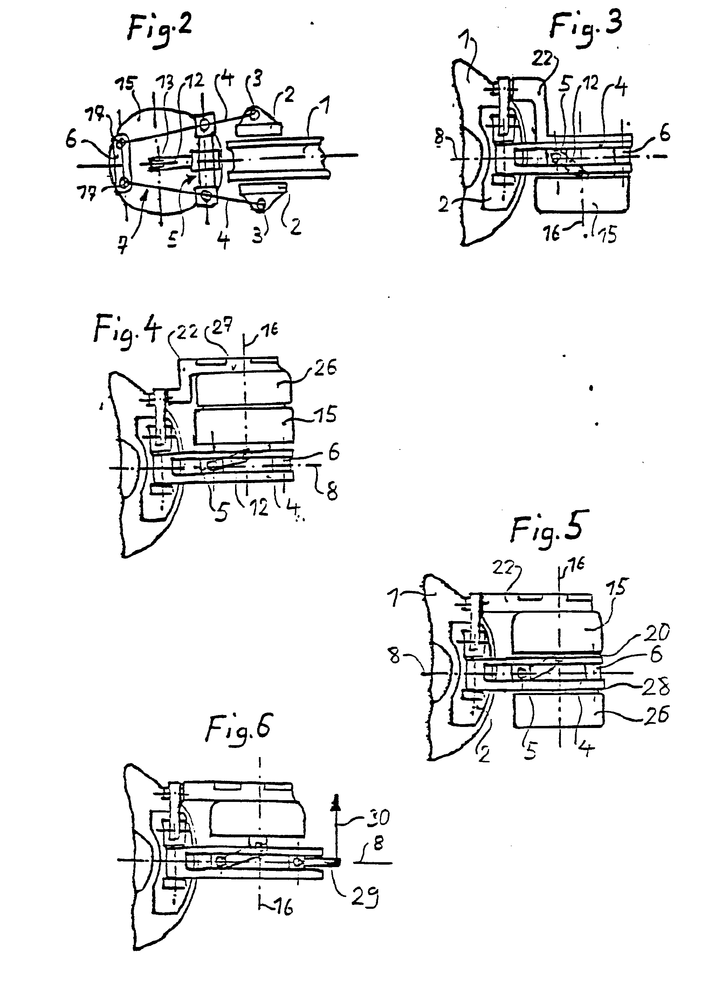

Gemäß den Fig. 1 und 2 weist die Scheibenbremse beidseitig einer Bremsscheibe 1 Bremsbacken 2 auf, welche mittels Bolzen 3 schwenkbar am bremsscheibenseitigen Ende von Bremshebeln 4 angelenkt sind; die Bremshebel 4 sind gemäß Fig. 1 als Doppelhebel 4a, 4b ausgeführt. Die Bremshebel 4 erstrecken sich etwa radial von der Bremsscheibe 1 weg, sind im mittleren Bereich ihrer Längserstreckung durch eine Zugstange 5 gelenkig miteinander verbunden und an ihren bremsscheibenfernen Enden an einem Lagerbock 6 angelenkt. Die beiden Bremshebel 4 bilden zusammen mit den Bremsbacken 2 und der Zugstange 5 eine Bremszange 7, welche sich im wesentlichen in, bzw. symmetrisch zu einer Ebene 8 befinden, welche die Achse der Bremsscheibe 1 beinhaltet. Die Zugstange 5 ist in Art eines Spannschlosses ausgebildet, sie weist eine Gewindespindel 9 auf, welche beiderseits je einen Gewindeabschnitt besitzt, wobei die Gewindeabschnitt mit zueinander entgegengesetzten Gewindesteigungen versehen sind. Die Gewindeabschnitte sind mit je einer in Stirnansicht würfelförmigen Mutter 10 verschraubt, welche Bolzenansätze 11 tragen, auf welchen die Bremshebel 4 im Bereich ihrer mittleren Längserstreckung schwenkbar gelagert sind. Zwischen den beiden Bremshebeln 4 sitzt auf der Gewindespindel 9 ein Drehhebel 12, der sich, leicht zur Ebene 8 geneigt, von der Bremsscheibe 1 weg erstreckt und dessen Ende mittels einer Lagerung 13 an der Kolbenstange 14 eines Bremszylinders 15 angelenkt ist. Der Drehhebel 12 kann in bekannter und daher hier nicht weiter zu beschreibender Weise mit einer handbetätigbaren oder selbsttätigen Spielnachstellvorrichtung versehen sein. Die Achse 16 des Bremszylinders 15 verläuft senkrecht zur Ebene 8 zwischen den beiden Bremshebeln 4 und zwischen der Zugstange 5 und dem Lagerbock 6 ; der Bremszylinder 15 befindet sich dabei gemäß Fig. 1 dicht oberhalb der Bremszange 7. Der Lagerbock 6 ist ähnlich einem umgekehrten T ausgebildet, an dessen Querbalken-Enden die bremsscheibenfernen Enden der beiden Bremshebel 4 mittels Bolzen 17 angelenkt sind. Der sich vom Querbalken 18 des Lagerbockes 6 nach oben erstreckende Steg 19 des Lagerbockes 6 ist an seinem oberen Ende an einem von der Bremsscheibe entfernt liegenden Bereich des Zylinderdeckels 20 des Bremszylinders 15 befestigt. Der Zylinderboden 21 des Bremszylinders ist mit einem Tragarm 22 verbunden, der in Richtung zur Bremsscheibe 1 auskragt und an dessen Ende 23 die oberen Enden von andererseits an den Bremsbacken 2 angelenkten Aufhängependeln 24 angelenkt sind. Der Tragarm 22 ist mit Befestigungsaugen 25 versehen, mit welchen er an einem Schienenfahrzeugrahmen, vorzugsweise durch Schrauben, befestigbar ist.

Beim Druckmittelbeaufschlagen des Bremszylinders 15 fährt dessen Kolbenstange 14 nach unten aus, dreht dabei den Drehhebel 12 mitsamt der Gewindespindel 9, wodurch die beiden Muttern 10 in Annäherungsrichtung aneinander verschraubt werden und dabei die Bremszange 7 unter Anpressen der Bremsbacken 2 an die Bremsscheibe 1 zuspannen. Das Bremsenlösen erfolgt entsprechend umgekehrt. Durch die erwähnte Nachstellvorrichtung kann im Lösezustand der Scheibenbremse der Abstand zwischen den Muttern 10 derart justiert werden, daß bei stets gleicher Lage des Drehhebels 12 durch entsprechendes Verdrehen der Gewindespindel 9 unabhängig vom Verschleiß der Bremsbacken 2 diese stets gleichen Abstand zur Bremsscheibe 1 aufweisen.

Die Scheibenbremse weist, wie aus Fig. 1 und Fig. 2 deutlich zu erkennen, einen äußerst kompakten und wenig Einbauraum erfordernden Aufbau auf und ist zudem mittels der Befestigungsaugen 25 als komplette Baueinheit in einfacher Weise am Schienenfahrzeug montierbar.

Bei entsprechenden Einbaubedingungen kann der Bremszylinder 15 auch unterhalb der Ebene 8 der Bremszange 7 angeordnet werden ; der Tragarm 22 ist dann zusammen mit dem Lagerbock 6 auf Seiten des Zylinderdeckels 20 anzuordnen und wird zweckmäßigerweise nach oben abgekröpft ausgebildet, wie in Fig. 2 dargestellt.

Falls zusätzlich zum Bremszylinder 15 eine Federspeicherbetätigung für die Scheibenbremse vorgesehen werden soll, ist es gemäß Fig. 4 möglich, dem Bremszylinder 15 einen Federspeicherbremszylinder 26 aufzusatteln und den Tragarm 22 an Zylinderboden 27 dieses Federspeicherbremszylinders zu befestigen. Der Tragarm 22 kann dabei nach unten abgekröpft ausgebildet werden.

Bei zusätzlicher Anordnung eines Federspeicherbremszylinders kann es jedoch auch zweckmäßig sein, ausgehend von der Anordnung nach Fig. 1, den Federspeicherbremszylinder 26 unterhalb der Ebene 8 der Bremszange 7 anzuordnen, wobei die Zylinderdeckel 20 des Bremszylinders 15 sowie 28 des Federspeicherbremszylinders 26 mittels geeigneter, in Fig. 5 nicht dargestellter Abstandshalter miteinander zu verbinden sind ; beispielsweise kann der Lagerbock 6 als ein solcher Abstandshalter ausgebildet werden.

Falls die Scheibenbremse zusätzlich mechanisch zuspannbar sein soll, ist es zweckmäßig, den Querbalken 18 des Lagerbockes 6 ebenfalls in Art eines Spannschlosses ähnlich der Zugstange 5 auszubilden, wobei die Gewindespindel mit einem Drehhebel 29 zu versehen ist, an welchem die mechanische Bremszuspannkraft in Pfeilrichtung 30 angreifen kann ; der Drehhebel 29 dreht dabei die Gewindespindel in Speizrichtung der mit ihr verschraubten, an den Enden der Bremshebel 4 angelenkten Muttern, wodurch die Bremszange 7 der Scheibenbremse in allgemein üblicher Art zugespannt wird (Fig. 6).

Bei allen Ausführungen stellt der Drehhebel 12 in Verbindung mit der Gewindespindel 9 und den Muttern 10 ein Kraftübersetzungsgetriebe dar, welches einen hohen Übersetzungsgrad aufweisen kann, so daß der Durchmesser des Bremszylinders und damit der von der Scheibenbremse benötigte Einbauraum besonders klein gehalten werden kann. Es ist jedoch auch möglich, andersartige Kraftübersetzungsgetriebe vorzusehen, beispielsweise kann das Übersetzungsgetriebe als Keilgetriebe ausgebildet sein, wobei der bei seiner Betätigung die Bremshebel 4 einander annähernde Keil von der Kolbenstange des Bremszylinders bewegbar anzuordnen ist.

Kurzbeschreibung :

Die Scheibenbremse für Schienenfahrzeuge weist eine in einer Ebene 8 angeordnete Bremszange 7 mit zwei in ihrem mittleren Bereich durch eine Zugstange 5 verbundenen Bremshebeln 4 auf. Die Zugstange 5 ist spannschloßartig mit einer drehbaren Gewindespindel 9 ausgebildet, die Gewindespindel 9 ist mittels eines gegebenenfalls eine Spielnachstellvorrichtung aufweisenden Drehhebels vom Bremszylinder 15 drehbar. Die Achse 16 des Bremszylinders 15 verläuft senkrecht zur Ebene 8 der Bremszange 7 zwischen den beiden Bremshebeln 4 und zwischen der Zugstange 5 und einer bremsscheibenfernen Abstützung (Lagerbock 6) für die Bremshebelenden. Der Bremszylinder 15 trägt die Abstützung 6 für die Bremshebelenden und eine Lagerung (Tragarm 22) für die Aufhängependel 24 der Bremsbacken 2.

Die Scheibenbremse weist eine kompakte, wenig Einbauraum erfordernde und als Baueinheit leicht am Schienenfahrzeug montierbare Form auf.

Bezugszeichenliste

1 Bremsscheibe
2 Bremsbacke
3 Bolzen
4 Bremshebel
4a,
4b Doppelhebel
5 Zugstange
6 Lagerbock
7 Bremszange
8 Ebene
9 Gewindespindel
10 Mutter
11 Bolzenansatz
12 Drehhebel
13 Lagerung
14 Kolbenstange
15 Bremszylinder
16 Achse
17 Bolzen
18 Querbalken
19 Steg
20 Zylinderdeckel
21 Zylinderboden
22 Tragarm
23 Ende
24 Aufhängependel
25 Befestigungszangen
26 Federspeicherbremszylinder
27 Zylinderboden
28 Zylinderdeckel
29 Drehhebel
30 Pfeilrichtung

**Patentansprüche**

1. Scheibenbremse für Schienenfahrzeuge, mit einer durch einen Bremszylinder (15) zuspannbaren, in einer Ebene (8) angeordneten Bremszange (7), die zwei an ihren bremsscheibenseitigen Enden Bremsbacken (2) tragende Bremshebel (4) umfaßt, welche in ihrem mittleren Bereich durch eine mittels des Bremszylinders längenveränderliche, gegebenenfalls eine automatische Spielnachstellvorrichtung aufweisende Zugstange (5) gelenkig miteinander verbunden sind, dadurch gekennzeichnet, daß der Bremszylinder (15) mit zur Ebene (8) der Bremszange (7) zumindest annähernd senkrechter Achsrichtung (16) über- oder unterhalb des mittleren Bremszangenbereiches angeordnet ist, daß die Kolbenstange (14) des Bremszylinders (15) über ein Kraftübersetzungsgetriebe mit einem Längenverstellglied (Gewindespindel 9) der Zugstange (5) gekoppelt ist, derart, daß eine Betätigung des Bremszylinders (15) eine Verkürzung der Zugstange (5) bewirkt, daß die beiden bremsscheibenfernen Enden der Bremshebel (4) unmittelbar oder mittelbar, gegebenenfalls gegeneinander, gelenkig abgestützt sind, und daß der am Schienenfahrzeug festgehaltene Bremszylinder (15) Tragvorrichtungen (Tragarm 22) für eine pendelnde Aufhängung der Bremsbacken (2) und eine drehbare Halterung der bremsscheibenfernen Bremshebelenden aufweist.

2. Scheibenbremse nach Anspruch 1, dadurch gekennzeichnet, daß ein drehbares Verschraubungsteil (Gewindespindel 9) der wie an sich bekannt spannschloßartig ausgebildeten Zugstange (5) gegebenenfalls über eine Spielnachstellvorrichtung mit einem sich im wesentlichen zwischen den Bremshebeln (4) und von der Bremsscheibe (1) weg erstreckenden Drehhebel (12) gekoppelt ist, dessen Ende an der Kolbenstange (14) des Bremszylinders (15) angelenkt ist.

3. Scheibenbremse nach Anspruch 1, dadurch gekennzeichnet, daß als Kraftübersetzungsgetriebe ein Keilgetriebe vorgesehen ist, dessen Keil von der Kolbenstange des Bremszylinders bewegbar ist.

4. Scheibenbremse nach einem oder mehreren der Ansprüche 1 bis 3, dadurch gekennzeichnet, daß der Zylinderkörper des Bremszylinders (15) bremsscheibenseitig einen etwa vom Zylinderboden (21) aus zumindest annähernd parallel zur Ebene (8) der Bremszange (7) auskragenden Tragarm (22) aufweist, an dessen Ende die Aufhängependel (24) für die Bremsbacken (2) angelenkt sind.

5. Scheibenbremse nach einem oder mehreren der Ansprüche 1 bis 4, dadurch gekennzeichnet, daß gleichachsig zum Bremszylinder (15) ein Federspeicherbremszylinder (26) vorgesehen ist, dessen Kolbenstange direkt oder indirekt mit dem Drehhebel (12) gekoppelt ist.

6. Scheibenbremse nach Anspruch 5, dadurch gekennzeichnet, daß der Federspeicherbremszylinder (26) dem Bremszylinder (15) aufgesattelt ist (Fig. 4).

7. Scheibenbremse nach Anspruch 5, dadurch gekennzeichnet, daß der Bremszylinder (15) zur einen und der Federspeicherbremszylinder (26) etwa spiegelbildlich hierzu auf der anderen Seite der Ebene (8) der Bremszange (7) angeordnet ist (Fig. 5).

8. Scheibenbremse nach einem oder mehreren der Ansprüche 1 bis 7, dadurch gekennzeichnet, daß der Zylinderkörper des Bremszylinders (15) an einer bremsscheibenfernen Stelle seines Zylinderdeckels (20) einen etwa T-artigen Lagerbock (6) für das Anlenken der Enden der jeweils als Doppelhebel (4a, 4b) ausgebildeten Bremshebel (4) aufweist, wobei der Lagerbock (6) am Ende seines Steges (19) am Zylinderdeckel (20) befestigt ist und die Bremshebel (4) an den Enden seines Querbalkens (18) angelenkt sind.

9. Scheibenbremsen nach einem oder mehreren der Ansprüche 1 bis 7, dadurch gekennzeichnet, daß die Abstützung der bremsscheibenfernen Enden der Bremshebel (4) eine mechanische Vorrichtung (Drehhebel 29) zum willkürlichen Auseinanderspreizen dieser Hebelenden aufweist.

**Claims**

1. Disk brake for rail vehicles having a brake clasp (7) which is capable of being clamped through a brake cylinder (15), which is arranged in one plane (8) and which embraces two brake levers (4) which bear brake shoes (2) at their ends on the brake disk side and which are connected with each other in an articulated manner in their central region by means of a drawbar (5) which is longitudinally variable by means of the brake cylinder and which, if need be, has an automatic play-adjusting device, characterised in that the brake cylinder (15) is arranged with an axial direction (16) at least approximately perpendicular to the plane (8) of the brake clasp (7) above or below the central brake clasp region, that the piston rod (14) of the brake cylinder (15) is coupled by way of a power transmission gearing with a longitudinally adjusting member (threaded spindle 9) of the drawbar (5) in such a way that actuation of the brake cylinder (15) gives rise to a shortening of the drawbar (5), that the two ends of the brake levers (4) remote from the brake disk are supported directly or indirectly, if need be, in respect of each other, in an articulated manner and that the brake cylinder (15) held fast on the rail vehicle has supporting devices (supporting arm 22) for a pendulum suspension for the brake shoes (2) and a turnable mounting support for the brake lever ends remote from the brake disk.

2. Disk brake according to claim 1, characterised in that a turnable screwing part (threaded spindle 9) of the drawbar (5), which is developed in a manner known *per se* as a turnbuckle, is coupled, if need be, by way of a play-adjusting device with a turning lever (12) which extends essentially between the brake levers (4) and away from the brake disk (1) and the end of which is articulated on the piston rod (14) of the brake cylinder (15).

3. Disk brake according to claim 1, characterised in that a wedge gearing is provided as a power transmission gearing, the wedge of which may be moved by the piston rod of the brake cylinder.

4. Disk brake according to one or several of the claims 1 to 3, characterised in that the cylinder body of the brake cylinder (15), on the brake disk side, has a supporting arm (22) which projects substantially from the base (21) of the cylinder at least approximately parallel to the plane (8) of the brake clasp (7) and at the end of which the suspension pendulums (24) are articulated for the brake shoes (2).

5. Disk brake according to one or several of the claims 1 to 4, characterised in that a spring-loaded brake cylinder (26) is provided equiaxial to the brake cylinder (15), the piston rod of said cylinder being coupled directly or indirectly with the turning lever (12).

6. Disk brake according to claim 5, characterised in that the spring-loaded brake cylinder (26) is saddle-mounted on the brake cylinder (15) (Figure 4).

7. Disk brake according to claim 5, characterised in that the brake cylinder (15) is arranged in respect of the one and the spring-loaded brake cylinder (26) in a substantially mirror-inverted manner hereto is arranged on the other side of the plane (8) of the brake clasp (7) (Figure 5).

8. Disk brake according to one or several of the claims 1 to 7, characterised in that the cylinder body of the brake cylinder (15) has at a point on its cylinder cover (20) remote from the brake disk a substantially T-like bearing block (6) for articulating the ends of the brake levers (4) which, in each case, are developed as double levers (4a, 4b), the bearing block (6) being secured at the end of its cross-piece (19) on the cylinder cover (20) and the brake levers (4) being articulated at the ends of its cross-beam (18).

9. Disk brakes according to one or several of the claims 1 to 7, characterised in that the support for the ends of the brake levers (4) remote from the brake disk has a mechanical device (turning lever 29) for the purpose of spreading these lever ends apart arbitrarily.

**Revendications**

1. Frein à disque pour des véhicules sur rails avec un étrier de frein (7) disposé dans un plan (8), susceptible d'être serré par un cylindre de frein (15) et comportant deux leviers de frein (4) qui portent à leur extrémité voisine de disque de frein, des mâchoires de frein (2), et qui sont articulés entre eux, dans leurs parties médianes, par une tige de traction (5) dont la longueur est susceptible d'être modifiée à l'aide du cylindre de frein et comportant éventuellement un dispositif de rattrapage de jeu, caractérisé par le fait que le cylindre de frein (15) est disposé au-dessus ou en dessous de la zone médiane de l'étrier de frein, et suivant une direction axiale (16) au moins à peu près perpendiculaire au plan (8) de l'étrier de frein (7), que la tige de piston (14) du cylindre de frein (15) est accouplée par l'intermédiaire d'une transmission à multiplication de la force à un élément de modification de la longueur (broche filetée 9) de la tige de traction (5) de manière qu'une commande du cylindre de frein (15) entraîne un raccourcissement de la tige de traction, que les deux extrémités des leviers de frein (4) qui sont éloignées du disque de freinage sont, directement ou indirectement et éventuellement entre eux, en appui articulé, et que le cylindre de frein (15) qui est solidaire du véhicule sur rails comporte des dispositifs de support (bras de support 22) pour une suspension basculante de la mâchoire de frein (2), ainsi qu'un support articulé pour les extrémités d'un levier de frein qui sont éloignées du disque du frein.

2. Frein à disque selon la revendication 1, caractérisé par le fait qu'un élément de vissage tournant (broche filetée 9) de la tige de traction (5), réalisée comme un tendeur, est reliée, essentiellement par l'intermédiaire d'un dispositif de rattrapage de jeu, à un levier tournant (12) s'étendant sensiblement entre les leviers de frein (4) dans le sens s'éloignant du disque de frein et dont les extrémités sont articulées sur la tige de piston (14) du cylindre de frein (15).

3. Frein à disque selon la revendication 1, caractérisé par le fait que la transmission à la multiplication de la force est constituée sous la forme d'une transmission à clavette dont la clavette est déplaçable par la tige de piston du cylindre de frein.

4. Frein à disque selon l'une ou selon plusieurs des revendications 1 à 3, caractérisé par le fait que le corps de cylindre du cylindre de frein (15) comporte, du côté du disque de frein, un bras de support (22) qui s'étend à peu près en porte-à-faux à partir du fond de cylindre (21) à peu près parallèlement au plan (8) de l'étrier de frein (7), et aux extrémités duquel sont articulés les éléments de suspension articulés pour les mâchoires de frein (2).

5. Frein à disque selon l'une ou plusieurs des revendications 1 à 4, caractérisé par le fait que coaxialement au cylindre de frein (15), il est prévu un cylindre à ressort accumulateur (26) dont la tige de piston est accouplée directement ou indirectement au levier tournant (12).

6. Frein à disque selon la revendication 5, caractérisé par le fait que le cylindre à ressort accumulateur (26) est monté sur le cylindre de frein (15) (figure 4).

7. Frein à disque selon la revendication 5, caractérisé par le fait que le cylindre de frein (15) est disposé sur un côté du plan (8) de l'étrier de frein (7), et le cylindre de frein à ressort accumulateur (26) est disposé à peu près symétriquement sur l'autre côté du plan (8) de l'étrier de frein (7) (figure 5).

8. Frein à disque selon l'une ou plusieurs des revendications 1 à 7, caractérisé par le fait que le corps de cylindre du cylindre de frein (15) possède en un emplacement de son couvercle de cylindre (20), qui est éloigné du disque de frein, un support de palier (6), ayant à peu près la forme d'un T, pour l'articulation des extrémités de leviers de freins (4) dont chacun est réalisé sous la forme d'un levier double (4a, 4b), le support de palier (6) étant fixé à l'extrémité de sa nervure (19) prévue sur le couvercle de cylindre (20), et les leviers de frein (4) étant articulés aux extrémités de sa poutrelle transversale (18).

9. Frein à disque selon l'une ou plusieurs des revendications 1 à 7, caractérisé par le fait que l'appui des extrémités des leviers de frein (4), qui sont éloignées du disque de frein, comportent un dispositif mécanique (levier tournant 29) pour écarter à volonté ces extrémités de leviers.

Fig. 1

# Fig.2

# Fig.3

# Fig.4

# Fig.5

# Fig.6